(19) Europäisches Patentamt
European Patent Office
Office européen des brevets

(11) EP 4 722 833 A1

(12) EUROPEAN PATENT APPLICATION
published in accordance with Art. 153(4) EPC

(43) Date of publication:
08.04.2026 Bulletin 2026/15

(51) International Patent Classification (IPC):
G05B 19/418 (2006.01) C22B 1/20 (2006.01)

(21) Application number: 24836042.2

(52) Cooperative Patent Classification (CPC):
C22B 1/20; G05B 19/418

(22) Date of filing: 02.07.2024

(86) International application number:
PCT/JP2024/023935

(87) International publication number:
WO 2025/009529 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.07.2023 JP 2023110832

(71) Applicant: JFE Steel Corporation
Tokyo, 100-0011 (JP)

(72) Inventors:
• MATSUSHITA, Masafumi
Tokyo 100-0011 (JP)
• GION, Hiroki
Tokyo 100-0011 (JP)
• BANBA, Haruhisa
Tokyo 100-0011 (JP)

(74) Representative: Hoffmann Eitle
Patent- und Rechtsanwälte PartmbB
Arabellastraße 30
81925 München (DE)

(54) **PROCESS DATA EDITING METHOD, PROCESS ABNORMALITY DETECTION METHOD, PROCESS DATA EDITING DEVICE, AND PROCESS ABNORMALITY DETECTION DEVICE**

(57) A process data editing method for a production line including a plurality of facilities having a plurality of devices that performs predetermined processing on a raw material and a conveyor that couples the plurality of devices and conveys the raw material includes a collecting step of collecting, by a collection unit included in a computer, process data indicating operational status of the plurality of facilities, and an editing step of compensating for a time lag according to a type of the facility through which the raw material passes in the production line and correlating the process data by an editing unit included in the computer.

FIG.5

## Description

Field

The present invention relates to a process data editing method, a process abnormality detection method, a process data editing device, and a process abnormality detection device.

Background

A sintering process in a steel field includes a plurality of production processes such as granulation, sintering, and cooling, and sintered ore is produced over a long time. Thus, when analyzing process data given to a raw material for a certain characteristic of a product or operation, it is necessary to perform time lag compensation in consideration of a difference in time when each piece of process data is given.

In off-line data analysis work, a data set necessary for the analysis may be created by addition of time compensation (time lag compensation) for a certain period of time according to process data to be focused. In addition, for example, Patent Literature 1 proposes a method of measuring a temperature distribution on a sintering machine and a change thereof by a thermometer attached to raw material and a pallet. As described above, it is not necessary to consider the time lag compensation in the data acquired from a thermometer that moves together with the raw material laid on the pallet.

In addition, Patent Literature 2 proposes a method of acquiring data such as a temperature distribution for each position in a sintering machine by individually identifying a pallet of the sintering machine by using an RFID tag.

Citation List

Patent Literature

Patent Literature 1: Japanese Patent Application Laid-open No. 2011-84758
Patent Literature 2: Japanese Patent Application Laid-open No. 2013-122341

Summary

Technical Problem

However, in the method proposed in Patent Literature 1, since a wireless base unit does not correspond to an individual pallet, it is uncertain at which position on the sintering machine the acquired data such as the temperature distribution is measured. Thus, it can be said that the method proposed in Patent Literature 1 is not suitable for analysis focusing on a relationship between the acquired data such as the temperature distribution and other process data.

In the method proposed in Patent Literature 2, although the problem of Patent Literature 1 is solved, a target facility is limited to the sintering machine. Thus, in the method proposed in Patent Literature 2, for example, like a granulation step and a sintering step, it is still necessary to consider the above-described time lag compensation in order to analyze raw material quality and a characteristic of the operation from a relationship between process data across the steps and the temperature distribution on the sintering machine.

The present invention has been made in view of the above, and an object thereof is to provide a process data editing method, process abnormality detection method, process data editing device, and process abnormality detection device capable of compensating for a time lag and correlating various kinds of process data in a production line.

Solution to Problem

In order to solve the above-described problem and achieve the object, a process data editing method according to the present invention for a production line including a plurality of facilities having a plurality of devices that perform predetermined processing on a raw material and a conveyor that couples the plurality of devices and conveys the raw material, includes: a collecting step of collecting, by a collection unit included in a computer, process data indicating operational status of the plurality of facilities; and an editing step of compensating for a time lag according to a type of a facility through which the raw material passes in the production line and correlating the process data by an editing unit included in the computer.

Moreover, in the above-described process data editing method according to the present invention, in the editing step, in a case where the conveyor is included in the facility through which the raw material passes, the time lag is compensated based on a transport speed of the raw material by the conveyor and an equipment length of the conveyor.

Moreover, in the above-described process data editing method according to the present invention, in the editing step, in a case where a device that deposits the raw material is included in the facility through which the raw material passes, the time lag is compensated based on a weight of the deposited raw material and an insertion speed of the raw material on a facility insertion side or based on the weight of the deposited raw material and a discharge speed of the raw material on a facility discharge side.

In order to solve the above-described problem and achieve the object, a process abnormality detection method according to the present invention for a production line including a plurality of facilities having a plurality of devices that performs predetermined processing on a raw material and a conveyor that couples the plurality of devices and that conveys the raw material, includes: a collecting step of collecting, by a collection unit included in a computer, process data indicating operational status of the plurality of facilities; an editing step of compensating for a time lag according to a type of a facility through which the raw material passes in the production line and correlating the process data by an editing unit included in the computer; and an abnormality detection step of detecting, by an abnormality detection unit included in the computer, abnormality in raw material quality or productivity in the production line based on the process data in which the time lag is compensated.

Moreover, in the above-described process abnormality detection method according to the present invention, the production line is a sintering process line of a steel plant.

In order to solve the above-described problem and achieve the object, a process data editing device according to the present invention for a production line including a plurality of facilities having a plurality of devices that performs predetermined processing on a raw material and a conveyor that couples the plurality of devices and conveys the raw material, includes: a collection unit configured to collect process data indicating operational status of the plurality of facilities; and an editing unit configured to compensate for a time lag according to a type of a facility through which the raw material passes in the production line and correlate the process data.

Moreover, in the above-described process data editing device according to the present invention, the editing unit is configured to compensate for the time lag based on a transport speed of the raw material by the conveyor and an equipment length of the conveyor in a case where the facility through which the raw material passes includes the conveyor.

Moreover, in the above-described process data editing device according to the present invention, in a case where the facility through which the raw material passes includes a device configured to deposit the raw material, the editing unit is configured to compensate for the time lag based on a weight of the deposited raw material and an insertion speed of the raw material on a facility insertion side or based on the weight of the deposited raw material and a discharge speed of the raw material on a facility discharge side.

In order to solve the above-described problem and achieve the object, a process abnormality detection device according to the present invention for a production line including a plurality of facilities having a plurality of devices that performs predetermined processing on a raw material and a conveyor that couples the plurality of devices and conveys the raw material, includes: a collection unit configured to collect process data indicating operational status of the plurality of facilities; an editing unit configured to compensate for a time lag according to a type of a facility through which the raw material passes in the production line and correlate the process data; and an abnormality detection unit configured to detect abnormality in raw material quality or productivity in the production line based on the process data in which the time lag is compensated. Advantageous Effects of Invention

According to the process data editing method, the process abnormality detection method, the process data editing device, and the process abnormality detection device according to the present invention, it is possible to compensate for a time lag and correlate various kinds of process data in a production line.

Brief Description of Drawings

FIG. 1 is a view illustrating an example of a steel sintering process line.
FIG. 2 is a view illustrating an example of a specific configuration of a surge hopper.
FIG. 3 is a view illustrating an example of a specific configuration of a sintering machine.
FIG. 4 is a view illustrating insertion time and discharge (extraction) time of a certain raw material in each facility while the raw material is conveyed from a facility on an upstream side to a facility on a downstream side in a production line.
FIG. 5 is a block diagram illustrating an example of a configuration of a process data editing device according to an embodiment.
FIG. 6 is a flowchart illustrating an example of a flow of a process data editing method according to the embodiment.
FIG. 7 is a block diagram illustrating an example of a configuration of a process abnormality detection device according to the embodiment.

FIG. 8 is a view illustrating an example of the process data editing method according to the embodiment, and illustrating a configuration example of a blending tank, a drum mixer, and a belt conveyor that couples the two, and a method of calculating an actual moisture ratio of a raw material in the drum mixer.

FIG. 9 is a view illustrating an example of the process data editing method according to the embodiment, (a) is a view illustrating a relationship between an actual moisture ratio and a target moisture ratio of a case where tracking according to the present invention is not performed, (b) is a view illustrating a relationship between an actual moisture ratio and a target moisture ratio of a case where tracking according to the present invention is performed.

Description of Embodiments

A process data editing method, process abnormality detection method, process data editing device, and process abnormality detection device according to an embodiment of the present invention will be described with reference to the drawings. Note that the present invention is not limited to the following embodiment, and components in the following embodiment include what can be easily replaced by those skilled in the art or what is substantially the same.

(Outline of a sintering process)

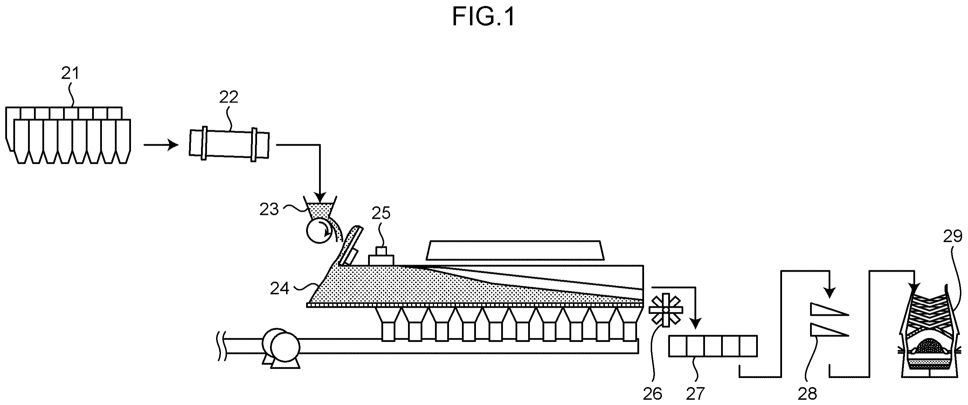

First, an outline of a sintering process of blast furnace ironmaking to which process a process data editing method according to the embodiment is applied will be described with reference to FIG. 1 to FIG. 4.

A steel sintering process line has a configuration in which a raw material granulation step, sintering step, and cooling step are coupled, and is a production line having a time constant of several hours. In the granulation step, a raw material is processed by devices such as a blending tank 21 and a drum mixer 22 as illustrated in FIG. 1. In the sintering step, the raw material is processed by devices such as a surge hopper (raw material insertion device) 23, a sintering machine 24, an ignition furnace 25, and a crusher 26. In the cooling step, the raw material is processed by devices such as a cooler (cooling device) 27 and a sieve 28. Then, the raw material processed by the sieve 28 is charged into the blast furnace 29.

Here, although not illustrated in FIG. 1, a conveyor (belt conveyor) that couples the respective devices and conveys the raw material is provided between the respective devices. In the present embodiment, the plurality of devices that applies predetermined processing to the raw material, and the conveyor that couples the plurality of devices and conveys the raw material are collectively referred to as "facilities".

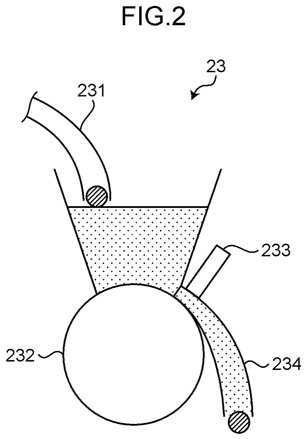

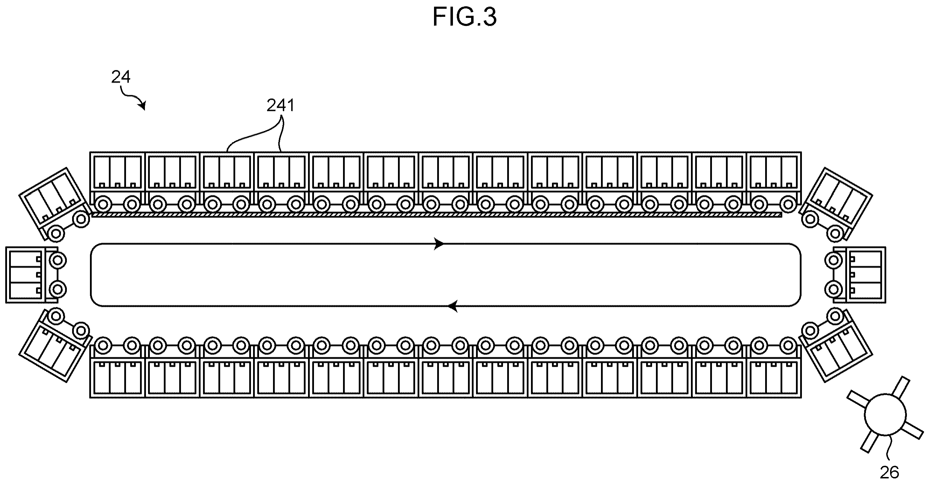

As illustrated in FIG. 2, the surge hopper 23 includes a raw material supply port 231, a roll feeder 232, a main/dividing gate 233, and a raw material discharge port 234. The surge hopper 23 plays a role of extracting a predetermined amount of a granulated raw material and laying the raw material on the pallet 241 of the sintering machine 24 illustrated in FIG. 3. In addition, since having a mechanism of storing the raw material, the surge hopper 23 has a feature that a generated time lag is sequentially changed depending on an operation condition.

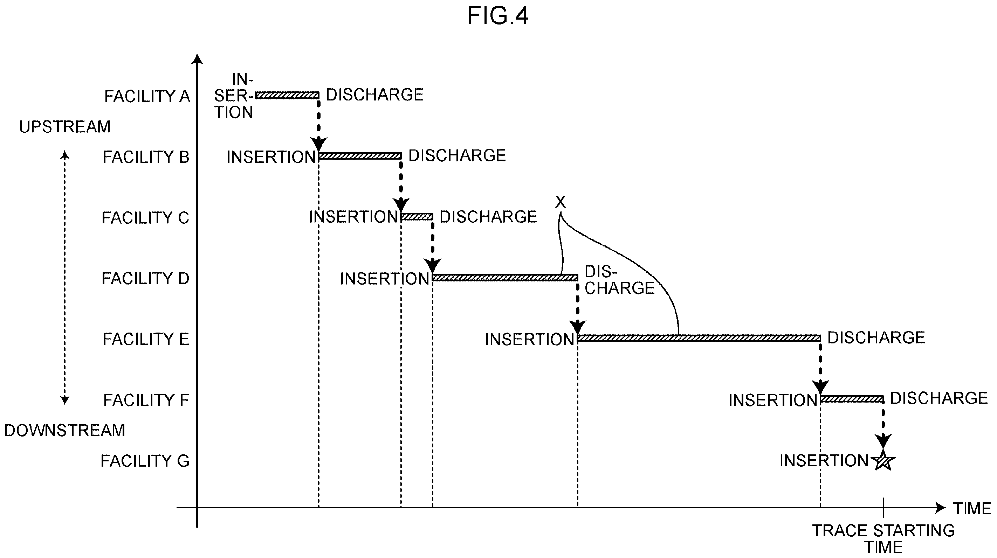

Next, an outline of conveyance of the raw material in the sintering process will be described. An insertion time and a discharge (extraction) time of a certain raw material in each facility while the raw material is conveyed from a facility A on an upstream side to a facility G on a downstream side are illustrated in FIG. 4. Note that the facilities A to G illustrated in the drawing include a belt conveyor in addition to various devices as illustrated in FIG. 1.

Although it is difficult to identify actual time when a specific raw material passes through the facility, in the present embodiment, the time when the raw material passes through the facility is estimated by calculation of a time lag compensation amount from operational status of each facility.

In the present embodiment, for example, at certain time, when and what kind of process data is given to the raw material, which is conveyed to the facility G, in the facilities on an upstream side thereof (such as the facilities A to F), or when and what kind of process data is measured in the facilities on the upstream side is converted into data. At that time, by tracing of the facilities on the upstream side in calculation of time from insertion to discharge of the raw material in each facility, a time lag of the process data in each facility is compensated, and each piece of the process data is correlated.

Here, the "process data" in the present embodiment indicates various kinds of data (various signals) acquired from each facility. The process data includes, for example, a setting value (such as transport speed, temperature, or the like) of when the raw material is processed in each facility, a measured value (such as temperature or the like) by a sensor attached to each facility, a manipulated variable (such as a current value of a motor or the like) given to each facility, and the like. Furthermore, data of quality at a specific position of the raw material conveyed to a sintering facility (observation data such as a moisture ratio and a particle size), quality of produced sintered ore (analytical value of strength, ingredient, or the like), and the like may also be included as the process data.

In addition, "correlation of each piece of process data" means, for example, associating the process data related to the raw material inserted into the facility G indicated by a star sign in FIG. 4 and the process data related to the raw material inserted into the facilities on the upstream side thereof (such as the facilities A to F). At that time, each piece of process data is associated after the time lag is compensated. In the present embodiment, time from the insertion to the discharge of the raw material in each facility (that is, residence time) indicated by X in FIG. 4 is defined as a "time lag compensation amount".

Note that an example in which the time lag amount of each facility is calculated with the facility G on the most downstream side indicated by the star sign as a starting point and the facility A on the most upstream side as an end point is illustrated in FIG. 4. However, for example, calculation may be performed with further addition of another facility to the downstream side of the facility G. Alternatively, the calculation may be performed with further addition of another facility to the upstream side of the facility A. In addition, a plurality of start points and end points indicated by star signs in the drawing may be set, and calculation may be performed for each of the start points to the end points.

Here, the time from the insertion to the discharge of the raw material in each facility (that is, the time lag compensation amount) needs to be calculated in consideration of the characteristic of the facility through which the raw material passes and an operational state of the facility. For example, in a case of the granulation step, the raw material extracted first from the blending tank 21 is conveyed by a belt conveyor and inserted into the drum mixer 22 via a plurality of belt conveyors.

Then, the raw material granulated by the drum mixer 22 is conveyed again by a belt conveyor, inserted into the surge hopper 23, and passed to the subsequent sintering step. In this granulation step, in a case where the belt conveyor is controlled at a constant speed, the time from the insertion of the raw material into the belt conveyor to the discharge can be regarded as constant. On the other hand, since the time from the insertion into the drum mixer 22 to the discharge (that is, residence time) changes depending on a rotation speed of the drum, it is necessary to calculate the time lag compensation amount in consideration of this point.

Thus, in the present embodiment, the time lag compensation amount is calculated by utilization of patterns 1 to 3 in a manner illustrated in Table 1, for example, according to a type of a facility through which the raw material passes, that is, a transport route of the raw material.

(Table 1)

| Classification | Calculation method of a time lag compensation amount | Example of applied facilities |
|---|---|---|
| Pattern 1 | With a raw material transport speed: $v(t)$, and an equipment length (distance from insertion point to discharge point): $L$, calculated by the following expression $$\int_{t_0}^{t_1} v(t)dt = L$$ | Belt conveyor, sintering machine, cooler, and the like |
| Pattern 2 | With a weight of deposited raw material: $M(t)$ an insertion amount per unit time: $S_{in}(t)$, and a discharge amount per unit time: $S_{out}(t)$, calculated by either one of the following two expressions $$\int_{t_0}^{t_1} S_{in}(t)dt = M(t_1) \qquad \int_{t_0}^{t_1} S_{out}(t)dt = M(t_0)$$ | Surge hopper, hot chute, discharge hopper, and the like |
| Pattern 3 | With a drum mixer rotation speed: R(t), and a drum mixer shape factor: $a$, calculated by the following expression $$t_1 - t_0 \propto R(t)^{-1} = \frac{a}{R(t)}$$ | Drum mixer |

<Pattern 1>

For example, in a facility that conveys the raw material by a drive mechanism such as a motor, such as the belt conveyor, the sintering machine 24, and the cooler 27, the time lag compensation amount is calculated by utilization of a method of the pattern 1 in Table 1. In this method, the time lag compensation amount is calculated based on a relationship between a transport speed of the raw material and an equipment length. In addition, a time point at which a value acquired by time integration (accumulation) of the transport speed measured every moment reaches the equipment length is determined as the time at which the raw material is discharged from the facility. In addition, a difference between the discharge time from the facility and the insertion time into the facility is the time lag compensation amount.

<Pattern 2>

For example, in a facility that deposits the raw material, such as the surge hopper 23, a hot chute, and a discharge hopper, the time lag compensation amount is calculated by utilization of a method of the pattern 2 in Table 1. In this method, the time lag compensation amount is calculated based on a relationship between a weight of the deposited raw material and an insertion amount of the raw material per unit time or a relationship between the weight of the deposited raw material and a discharge amount of the raw material per unit time. In addition, a difference between the discharge time from the facility and the insertion time into the facility is the time lag compensation amount.

<Pattern 3>

For example, the drum mixer 22 calculates the time lag compensation amount by using the method of the pattern 3 in Table 1. In this method, the time lag compensation amount is calculated based on the rotation speed of the drum mixer 22 and a shape factor of the drum mixer 22. Note that the shape factor of the drum mixer 22 is a factor proportional to a diameter of the drum mixer 22.

(Process data editing device)

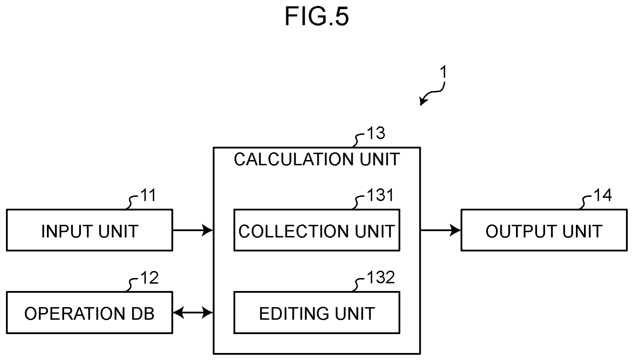

Next, an example of a configuration of the process data editing device according to the embodiment will be described with reference to FIG. 5. The drawing is a view illustrating a configuration of an information processing device 1 that realizes the process data editing device according to the embodiment. The information processing device 1 is realized by, for example, a general-purpose computer such as a workstation or a personal computer, a server arranged on a cloud, or the like. Furthermore, the information processing device 1 includes an input unit 11, an operation DB 12, a calculation unit 13, and an output unit 14.

The input unit 11 is an input means to the calculation unit 13, and is realized by an input device such as a keyboard, a mouse pointer, and a numeric keypad. The input unit 11 inputs information necessary for various kinds of processing in the calculation unit 13.

The operation DB 12 stores process data acquired from each facility. As described above, the process data includes, for example, an operation condition (for example, a manipulated variable such as a current value of a motor) of when the raw material is processed in each facility, a measured value (such as temperature) of a sensor attached to each facility, and the like.

The calculation unit 13 is realized by, for example, a processor including a central processing unit (CPU) or the like and a memory (main storage unit) including a random access memory (RAM), a read only memory (ROM), or the like.

The calculation unit 13 realizes a function matching a predetermined purpose by loading the program into a work area of the main storage unit and executing the program, and by controlling each component and the like through the execution of the program. The calculation unit 13 functions as a collection unit 131 and an editing unit 132 through execution of the program described above. Although FIG. 5 is a view illustrating an example in which the functions of the respective units are realized by, for example, one computer (calculation unit), a realization means of the functions of the respective units is not specifically limited, and the functions of the respective units may be realized by, for example, a plurality of computers.

The collection unit 131 accesses the operation DB 12, and collects process data indicating operational status of a plurality of facilities.

The editing unit 132 compensates for the time lag according to a type of the facility through which the raw material passes in the production line, and correlates the process data collected by the collection unit 131. That is, the collection unit 131 associates pieces of the process data in which the time lag is compensated. As a result, for example, it is possible to specify a state of the raw material at a certain point in the production process in the facility on the upstream side (what kind of processing is performed) by tracing back to the past. In the present embodiment, the correlated process data in which the time lag is compensated is also referred to as "tracked data".

For example, in a case where a conveyor (belt conveyor) is included in the facility through which the raw material passes, the editing unit 132 compensates for the time lag based on the transport speed of the raw material by the conveyor and the equipment length of the conveyor as illustrated in the pattern 1 in Table 1. Then, the editing unit 132 correlates pieces of the process data in which the time lag is compensated.

In addition, for example, in a case where the facility through which the raw material passes includes a device that deposits the raw material, the editing unit 132 compensates for the time lag by the method illustrated in the pattern 2 in Table 1 described above. That is, the editing unit 132 compensates for the time lag based on a weight of the raw material deposited in the device and the insertion speed of the raw material on the facility insertion side or based on the weight of the raw material deposited in the device and the discharge speed of the raw material on the facility discharge side. Then, the editing unit 132 correlates the pieces of process data in which the time lag is compensated.

In addition, for example, in a case where the drum mixer 22 is included in the facility through which the raw material passes, the editing unit 132 calculates the time lag compensation amount based on the rotation speed of the drum mixer 22 and the shape factor of the drum mixer 22 as illustrated in the pattern 3 in Table 1 described above. Then, the editing unit 132 correlates the pieces of process data in which the time lag is compensated.

For example, in a case of focusing on a certain raw material, the editing unit 132 performs the time lag compensation and the correlation of all pieces of process data in the facility on the upstream side to the facility on the downstream side in which facilities the raw material is processed. As a result, for example, it is possible to easily analyze the process data given to the raw material with respect to a certain characteristic of a product or operation.

In addition, for example, when the process data at a specific time point in the sintering process line (see FIG. 1) is evaluated, it is also possible to confirm correlation with the process data in the facility on the upstream side thereof. For example, in a case where there is a problem in quality of the raw material currently processed by the sieve 28 (alternatively, the crusher 26, the drum mixer 22, or the like), it is possible to confirm a state of the raw material in the facility on the upstream side thereof and specify a cause.

The output unit 14 is realized by, for example, a display device such as an LCD display or a CRT display. The output unit 14 outputs the tracked data edited by the editing unit 132.

(Process data editing method)

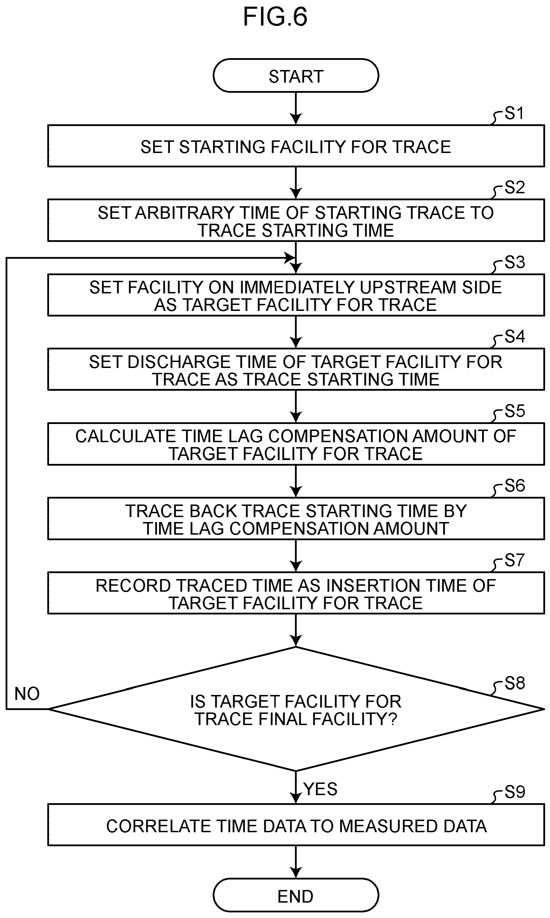

An example of the process data editing method according to the embodiment will be described with reference to FIG. 4 and FIG. 6. FIG. 6 is a view illustrating an example of details of processing performed by the editing unit 132 after the collection unit 131 collects the process data.

First, a starting facility for the trace is set (Step S1). The "starting facility for the trace" indicates, for example, the "facility G" in FIG. 4. Subsequently, arbitrary time at which the trace is started is set as trace starting time (Step S2). As in Step S1 and S2, the starting facility for the trace and the trace starting time are set in order to associate, with the raw material that passes through a target facility at target time, the process data given to the raw material in the facility upstream thereof by tracking.

Subsequently, a facility on an immediately upstream side of the starting facility for the trace is set as a target facility for the trace of tracking (Step S3). The "target facility for the trace" indicates, for example, the "facility F" in FIG. 4. Here, in the adjacent facilities, the discharge time of the facility on the upstream side and the insertion time of the facility on the downstream side can be regarded as the same. Thus, the discharge time of the target facility for the trace which facility is located on the immediately upstream side of the starting facility for the trace is set as the trace starting time (Step S4).

Subsequently, a time lag compensation amount of the target facility for the trace is calculated by utilization of any one of the patterns 1 to 3 in Table 1 (Step S5). Subsequently, the trace starting time is traced back by the time lag compensation amount (Step S6), and the traced time is recorded as the insertion time of the target facility for the trace (Step S7).

Subsequently, it is determined whether the target facility for the trace is a final facility to be traced (Step S8). In Step S8, in a case where the target facility for the trace is not the final facility to be traced (No in Step S8), the processing returns to Step S3, and the processing of Step S3 to S7 is repeated until the final facility to be traced is reached.

On the other hand, in Step S8, in a case where the target facility for the trace is the final facility to be traced (Yes in Step S8), the following processing is performed. In this case, for example, with respect to measured data (= process data) of a sensor provided on the insertion side or the discharge side of each facility, each piece of time data recorded in the tracking processing is correlated (Step S9), and creation as the tracked data is performed.

(Process abnormality detection device)

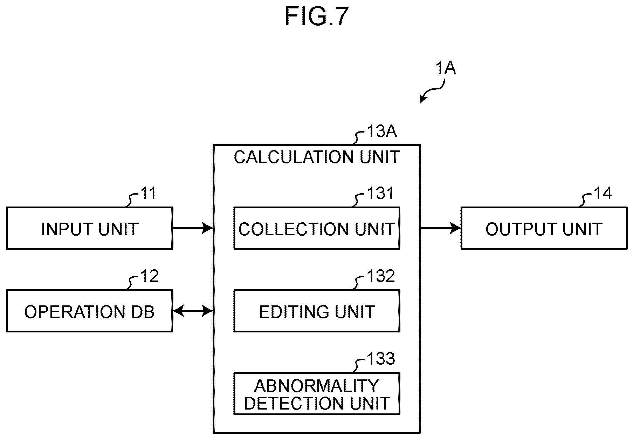

An example of a configuration of the process abnormality detection device according to the embodiment will be described with reference to FIG. 7. A configuration of an information processing device 1A that realizes the process abnormality detection device according to the embodiment is illustrated in the drawing. The information processing device 1A is realized by, for example, a general-purpose computer such as a workstation or a personal computer, a server arranged on a cloud, or the like. Furthermore, the information processing device 1A includes an input unit 11, an operation DB 12, a calculation unit 13A, and an output unit 14. Since the input unit 11, the operation DB 12, and the output unit 14 in the configuration of the information processing device 1A are similar to those of the information processing device 1 described above, description thereof is omitted.

The calculation unit 13A is realized by, for example, a processor including a CPU or the like, and a memory (main storage unit) including a RAM, a ROM, or the like. The calculation unit 13A realizes a function matching a predetermined purpose by loading a program into a work area of the main storage unit and executing the program, and by controlling each component and the like through the execution of the program. The calculation unit 13A functions as a collection unit 131, an editing unit 132, and an abnormality detection unit 133 through execution of the program described above. Note that although an example in which the function of each unit is realized by, for example, one computer (calculation unit) is illustrated in FIG. 7, a realization means of the function of each unit is not specifically limited, and the function of each unit may be realized by a plurality of computers, for example. In addition, since the collection unit 131 and the editing unit 132 in the configuration of the calculation unit 13A are similar to those of the calculation unit 13 described above, the description thereof will be omitted.

The abnormality detection unit 133 performs an anomaly diagnosis of detecting abnormality with respect to the raw material quality or productivity in the production line based on the process data in which the time lag is compensated by the editing unit 132.

As the anomaly diagnosis, there is a method of constructing a prediction model of predicting specific process data based on other process data in advance, and evaluating a prediction error that is a difference between a predicted value of the process data based on the prediction model and an actual value thereof. In addition, as another method of the anomaly diagnosis, for example, abnormality can be detected by evaluation of a deviation from normal process data. In addition, it is also possible to perform anomaly diagnosis based on a statistical anomaly detection technique such as principal component analysis by using a plurality of pieces of process data.

The abnormality detection unit 133 determines, for example, an abnormality monitoring item and a method of the anomaly diagnosis in the above manner, and detects presence or absence of abnormality for each abnormality monitoring item. In addition, for example, in a case where there is a problem in the quality of the raw material currently processed by the sieve 28 (alternatively, the crusher 26, the drum mixer 22, or the like), the abnormality detection unit 133 can confirm the state of the raw material in the facility on the upstream side thereof and specify a cause.

(Process abnormality detection method)

A process anomaly diagnosis method according to the embodiment will be described. In the process abnormality detection method according to the embodiment, abnormality with respect to the raw material quality or productivity in the production line is detected based on the process data in which the time lag is compensated by the process data editing method described above. Examples of the production line include a sintering process line in a steel plant.

In addition, in the process abnormality detection method according to the embodiment, data indicating a state of each facility or a state of the raw material is correlated with the data having a physical and spatial extent from the upstream to the downstream facilities based on the time lag amount by the process data editing method described above. Then, in the process abnormality detection method according to the embodiment, a prediction model necessary for the abnormality detection can be constructed by utilization of such a data set.

For example, a current value of a raw material transport belt conveyor before a sintering plant depends on an amount of raw materials on the belt conveyor. Thus, the current value can be predicted from the weight of each of the raw materials in consideration of transport time to each motor position by making extraction timing of the plurality of extracted raw materials. It is possible to perform abnormality detection of the motor of the belt conveyor or the belt conveyor itself based on a prediction error between a current prediction value and an actual current value by the prediction model. In addition, operation abnormality detection and the like using a prediction model of a raw material moisture ratio in the drum mixer 22 (described later) are also performed based on the data subjected to the data editing of the time lag compensation. Furthermore, it is also possible to predict quality including strength and the like of a produced sintered ore and to perform quality abnormality detection based on the prediction error.

The data set acquired by the present embodiment can acquire an effect thereof with a focus on a relationship (correlation or the like) between a plurality of variables. In addition, examples of the abnormality detection method includes a method of detecting abnormality by evaluating a deviation between a predicted amount and an actual value or a deviation between the predicted amount and a target value based on a prediction model that predicts a facility state or the like constructed by utilization of normal data, abnormality detection based on principal component analysis, and the like. Furthermore, the prediction model used for the abnormality detection is not limited to a method based on a statistical method such as machine learning, and may be constructed by a method based on a scientific approach such as a physical model.

According to the process abnormality detection method according to the embodiment, since the abnormality detection is performed in consideration of an influence of the time lag from the facility on the upstream side to the facility on the downstream side, it is possible to suppress a variation in the data which variation depends on the time lag and to perform the accurate abnormality detection.

(Specification of a cause of abnormality)

In a case where the abnormality detection is performed based on the prediction error, it is also possible to specify process data that is an explanatory variable contributing to the prediction error and clearly indicate the process data as a candidate for a cause of the abnormality. In addition, it is also possible to extract an abnormal candidate signal by evaluating a deviation from a normal state of each explanatory variable. As a result, it is possible to promptly specify a cause of operational anomaly, minimize an influence of abnormal operation on product quality, shorten recovery to the normal state, and contribute to maintenance of a production speed and maintenance of the product quality.

(Example)

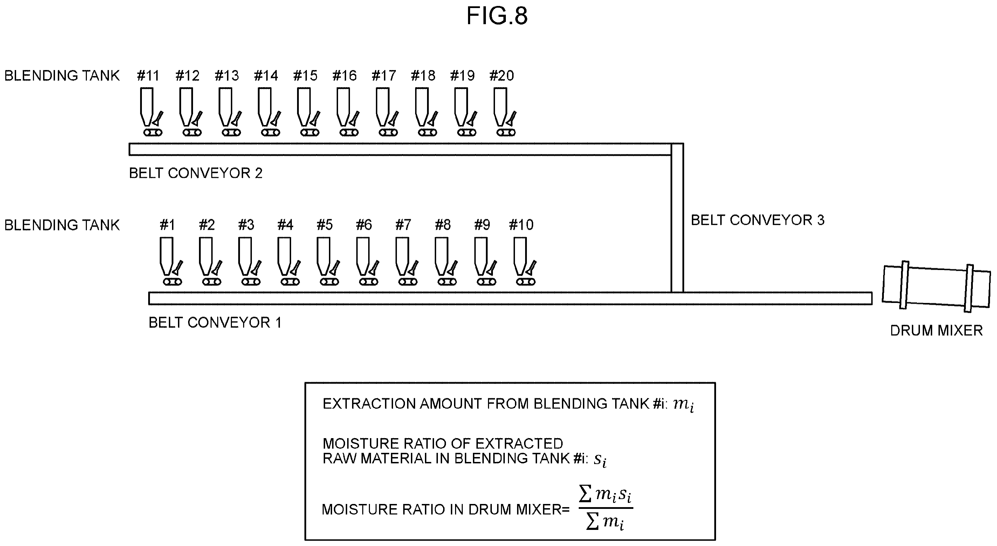

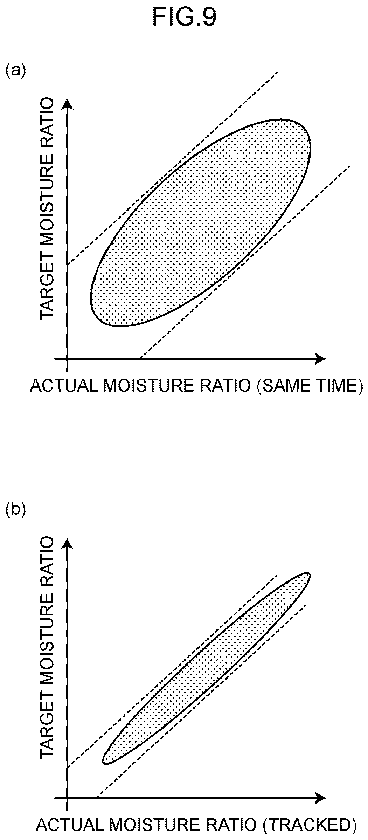

An example of the process data editing method according to the present invention will be described with reference to FIG. 8 and FIG. 9. FIG. 8 is a view illustrating a configuration example of blending tanks #1 to #20, a drum mixer, and belt conveyors 1 to 3 that couple the blending tanks #1 to #20 and the drum mixer, and a method of calculating a moisture ratio (actual moisture ratio) of a raw material in the drum mixer.

Raw materials used in the sintering process are stored in the plurality of blending tanks, and are extracted from the plurality of blending tanks, granulated, and used in consideration of compounding of the raw materials, a production schedule, and the like. An amount of the raw material extracted from each of the blending tanks (extraction amount) is measured for each of the blending tanks by a weighing device attached to each of the blending tanks. In addition, a moisture amount in each of the blending tanks is measured for each of the blending tanks by a moisture sensor attached to each of the blending tanks.

The raw material extracted from each of the blending tanks is granulated by being sprinkled and mixed by the drum mixer. In order to optimize this granulation, it is necessary to maintain an appropriate moisture ratio, and it is necessary to control a target value and an actual value of the moisture ratio.

The actual moisture ratio of the raw material is calculated by an expression in a lower part of FIG. 8. On the other hand, the weighing device and the moisture sensor installed in each of the blending tanks are provided at positions physically away from the drum mixer. Thus, by utilization of the present invention, process data representing operational status of each of the devices included in the entire process is continuously collected, and the time lag is compensated according to a transport route of the raw material and the process data is correlated, whereby tracked data is created.

For example, it is assumed that a lag time from the drum mixer that is the facility on the downstream side to the blending tank #1 that is the facility on the upstream side is 30 minutes. In this case, an extraction amount and a moisture amount of the raw material in the blending tank #1 30 minutes ago are associated with the actual moisture ratio of the raw material in the current drum mixer. In addition, extraction amounts and moisture amounts of the other blending tanks #2 to #20 are similarly associated with the actual moisture ratio of the drum mixer, and tracked data is created. Furthermore, for example, in a case where the transport speeds of the belt conveyors 1 to 3 are different, the time lag is compensated in consideration thereof, and the tracked data is created.

As a result, for example, as illustrated in FIG. 9, the actual moisture ratio of the raw material in the drum mixer can be calculated with high accuracy. Note that (a) of the drawing is a view illustrating a relationship between the actual moisture ratio and the target moisture ratio of a case where tracking according to the present invention is not performed. In addition, (b) of the drawing is a view illustrating the relationship between the actual moisture ratio and the target moisture ratio of a case where the tracking according to the present invention is performed.

In addition, in the present invention, it is also possible to perform abnormality detection for suppressing the deviation of the actual moisture ratio from the target moisture ratio by accurately calculating the actual moisture ratio as described above. In this case, by utilization of the present invention, improvement in the abnormality detection is expected, and it becomes possible to stabilize production and quality of the raw materials.

In addition, for example, it is also possible to statistically control, with respect to an estimated moisture ratio after granulation which ratio is calculated from a moisture ratio in the drum mixer and a water spray amount in the drum mixer, a ratio to the target moisture ratio in the granulation step or a difference from the target moisture ratio in the granulation step. In addition, with respect to the ratio to the target moisture ratio in the granulation step or the difference from the target moisture ratio in the granulation step, an extent during normal operation is determined in advance, and it is possible to detect abnormality in a case where a superior deviation is confirmed as compared with the extent. Furthermore, in a case where a threshold can be set for the actual moisture ratio from a physical viewpoint, it is also possible to detect abnormality based on the value.

According to the process data editing method, the process abnormality detection method, the process data editing device, and the process abnormality detection device according to the embodiment described above, it is possible to compensate for the time lag and correlate various kinds of process data in the production line. As a result, the appropriately correlated process data in which the time lag is compensated can be used for monitoring, abnormality detection, optimization, and the like of the entire process by utilization for a purpose of data analysis, quality control, facility maintenance, and the like.

Although the embodiment to which the invention made by the present inventors is applied has been described above, the present invention is not limited by the description and drawings included in a part of the disclosure of the present invention according to the present embodiment. That is, other embodiments, examples, operation techniques, and the like made by those skilled in the art based on the present embodiment are all included in the scope of the present invention.

Reference Signs List

1, 1A INFORMATION PROCESSING DEVICE
11 INPUT UNIT
12 OPERATION DB
13, 13A CALCULATION UNIT
131 COLLECTION UNIT (COLLECTION MEANS)
132 EDITING UNIT (EDITING MEANS)
133 ABNORMALITY DETECTION UNIT (ABNORMALITY DETECTION MEANS)
14 OUTPUT UNIT
21 BLENDING TANK
22 DRUM MIXER
23 SURGE HOPPER (RAW MATERIAL INSERTION DEVICE)
231 RAW MATERIAL SUPPLY PORT
232 ROLL FEEDER
233 MAIN/DIVIDING GATE
234 RAW MATERIAL DISCHARGE PORT
24 SINTERING MACHINE
241 PALLET
25 IGNITION FURNACE
26 CRUSHER
27 COOLER (COOLING DEVICE)
28 SIEVE
29 BLAST FURNACE

**Claims**

1. A process data editing method for a production line including a plurality of facilities having a plurality of devices that perform predetermined processing on a raw material and a conveyor that couples the plurality of devices and conveys the raw material, the method comprising:

   a collecting step of collecting, by a collection unit included in a computer, process data indicating operational status of the plurality of facilities; and
   an editing step of compensating for a time lag according to a type of a facility through which the raw material passes in the production line and correlating the process data by an editing unit included in the computer.

2. The process data editing method according to claim 1, wherein in the editing step, in a case where the conveyor is included in the facility through which the raw material passes, the time lag is compensated based on a transport speed of the raw material by the conveyor and an equipment length of the conveyor.

3. The process data editing method according to claim 1, wherein in the editing step, in a case where a device that deposits the raw material is included in the facility through which the raw material passes, the time lag is compensated based on a weight of the deposited raw material and an insertion speed of the raw material on a facility insertion side or based on the weight of the deposited raw material and a discharge speed of the raw material on a facility discharge side.

4. A process abnormality detection method for a production line including a plurality of facilities having a plurality of devices that performs predetermined processing on a raw material and a conveyor that couples the plurality of devices and that conveys the raw material, the method comprising:

   a collecting step of collecting, by a collection unit included in a computer, process data indicating operational status of the plurality of facilities;
   an editing step of compensating for a time lag according to a type of a facility through which the raw material passes in the production line and correlating the process data by an editing unit included in the computer; and
   an abnormality detection step of detecting, by an abnormality detection unit included in the computer, abnormality in raw material quality or productivity in the production line based on the process data in which the time lag is compensated.

5. The process abnormality detection method according to claim 4, wherein the production line is a sintering process line of a steel plant.

6. A process data editing device for a production line including a plurality of facilities having a plurality of devices that performs predetermined processing on a raw material and a conveyor that couples the plurality of devices and conveys the raw material, the device comprising:

a collection unit configured to collect process data indicating operational status of the plurality of facilities; and
an editing unit configured to compensate for a time lag according to a type of a facility through which the raw material passes in the production line and correlate the process data.

7. The process data editing device according to claim 6, wherein the editing unit is configured to compensate for the time lag based on a transport speed of the raw material by the conveyor and an equipment length of the conveyor in a case where the facility through which the raw material passes includes the conveyor.

8. The process data editing device according to claim 6, wherein in a case where the facility through which the raw material passes includes a device configured to deposit the raw material, the editing unit is configured to compensate for the time lag based on a weight of the deposited raw material and an insertion speed of the raw material on a facility insertion side or based on the weight of the deposited raw material and a discharge speed of the raw material on a facility discharge side.

9. A process abnormality detection device for a production line including a plurality of facilities having a plurality of devices that performs predetermined processing on a raw material and a conveyor that couples the plurality of devices and conveys the raw material, the device comprising:

a collection unit configured to collect process data indicating operational status of the plurality of facilities;
an editing unit configured to compensate for a time lag according to a type of a facility through which the raw material passes in the production line and correlate the process data; and
an abnormality detection unit configured to detect abnormality in raw material quality or productivity in the production line based on the process data in which the time lag is compensated.

FIG.1

EP 4 722 833 A1

# FIG.2

FIG.3

# FIG.4

EP 4 722 833 A1

FIG.5

# FIG.6

```
                    ┌─────────────┐
                    │    START    │
                    └──────┬──────┘
                           │                        ⌐S1
        ┌──────────────────▼──────────────────────┐
        │      SET STARTING FACILITY FOR TRACE     │
        └──────────────────┬──────────────────────┘
                           │                        ⌐S2
        ┌──────────────────▼──────────────────────┐
        │  SET ARBITRARY TIME OF STARTING TRACE TO │
        │           TRACE STARTING TIME            │
        └──────────────────┬──────────────────────┘
                           │                        ⌐S3
        ┌──────────────────▼──────────────────────┐
        │ SET FACILITY ON IMMEDIATELY UPSTREAM SIDE│
        │        AS TARGET FACILITY FOR TRACE      │
        └──────────────────┬──────────────────────┘
                           │                        ⌐S4
        ┌──────────────────▼──────────────────────┐
        │  SET DISCHARGE TIME OF TARGET FACILITY FOR│
        │        TRACE AS TRACE STARTING TIME      │
        └──────────────────┬──────────────────────┘
                           │                        ⌐S5
        ┌──────────────────▼──────────────────────┐
        │ CALCULATE TIME LAG COMPENSATION AMOUNT OF│
        │           TARGET FACILITY FOR TRACE      │
        └──────────────────┬──────────────────────┘
                           │                        ⌐S6
        ┌──────────────────▼──────────────────────┐
        │      TRACE BACK TRACE STARTING TIME BY   │
        │       TIME LAG COMPENSATION AMOUNT       │
        └──────────────────┬──────────────────────┘
                           │                        ⌐S7
        ┌──────────────────▼──────────────────────┐
        │  RECORD TRACED TIME AS INSERTION TIME OF │
        │           TARGET FACILITY FOR TRACE      │
        └──────────────────┬──────────────────────┘
                           │
                        ⟨ S8 ⟩
   NO ◄────  IS TARGET FACILITY FOR TRACE FINAL FACILITY?
                           │ YES               ⌐S9
        ┌──────────────────▼──────────────────────┐
        │   CORRELATE TIME DATA TO MEASURED DATA   │
        └──────────────────┬──────────────────────┘
                           │
                    ┌──────▼──────┐
                    │     END     │
                    └─────────────┘
```

FIG.7

1A

13A
CALCULATION UNIT

11
INPUT UNIT

131
COLLECTION UNIT

14
OUTPUT UNIT

12
OPERATION DB

132
EDITING UNIT

133
ABNORMALITY DETECTION UNIT

# FIG.8

BLENDING TANK  #11  #12  #13  #14  #15  #16  #17  #18  #19  #20

BELT CONVEYOR 2

BELT CONVEYOR 3

BLENDING TANK  #1  #2  #3  #4  #5  #6  #7  #8  #9  #10

BELT CONVEYOR 1

DRUM MIXER

EXTRACTION AMOUNT FROM BLENDING TANK #i: $m_i$

MOISTURE RATIO OF EXTRACTED
RAW MATERIAL IN BLENDING TANK #i: $s_i$

MOISTURE RATIO IN DRUM MIXER= $\dfrac{\sum m_i s_i}{\sum m_i}$

EP 4 722 833 A1

# FIG.9

(a)

TARGET MOISTURE RATIO

ACTUAL MOISTURE RATIO (SAME TIME)

(b)

TARGET MOISTURE RATIO

ACTUAL MOISTURE RATIO (TRACKED)

## INTERNATIONAL SEARCH REPORT

| International application No. |
|---|
| **PCT/JP2024/023935** |

**A. CLASSIFICATION OF SUBJECT MATTER**

*G05B 19/418*(2006.01)i; *C22B 1/20*(2006.01)i
FI:   G05B19/418 Z; C22B1/20 U

According to International Patent Classification (IPC) or to both national classification and IPC

**B. FIELDS SEARCHED**

Minimum documentation searched (classification system followed by classification symbols)

G05B19/418; C22B1/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-180666 A (OMRON CORPORATION) 15 November 2018 (2018-11-15) | 1-2, 4-7, 9 |
| | paragraphs [0030]-[0151], fig. 1-15 | |
| A | paragraphs [0030]-[0151], fig. 1-15 | 3, 8 |
| X | JP 2021-86457 A (KAO CORPORATION) 03 June 2021 (2021-06-03) | 1-2, 4, 6-7, 9 |
| | paragraphs [0024], [0038], fig. 1, 4 | |
| Y | paragraphs [0024], [0038], fig. 1, 4 | 5 |
| Y | JP 4-2732 A (NIPPON STEEL CORPORATION) 07 January 1992 (1992-01-07) | 5 |
| | description, page 3, upper left column, line 1 - page 4, upper left column, line 15, fig. 1-2 | |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/023935**

| Patent document cited in search report | | | Publication date (day/month/year) | Patent family member(s) | | | Publication date (day/month/year) |
|---|---|---|---|---|---|---|---|
| JP | 2018-180666 | A | 15 November 2018 | US | 2018/0292799 | A1 | |
| | | | | paragraphs [0045]-[0166], fig. 1-15 | | | |
| | | | | EP | 3385805 | A1 | |
| | | | | CN | 108693840 | A | |
| JP | 2021-86457 | A | 03 June 2021 | WO | 2021/106288 | A1 | |
| | | | | CN | 114760969 | A | |
| JP | 4-2732 | A | 07 January 1992 | (Family: none) | | | |

Form PCT/ISA/210 (patent family annex) (July 2022)

**EP 4 722 833 A1**

## REFERENCES CITED IN THE DESCRIPTION

### Patent documents cited in the description

- JP 2011084758 A

- JP 2013122341 A